# EUROPEAN PATENT APPLICATION

(11) **EP 4 195 880 A1**
(43) Date of publication of application: **14.06.2023**
(21) Application number: 21213782.2
(22) Date of filing: 10.12.2021
(51) Int. Cl.: H05B 45/357, H05B 45/48

(54) **LED LAMP ARRANGEMENT WITH UNIFORM LIGHT EFFECT**

(71) Applicant: Silicon Hill B.V., 1098 XG Amsterdam (NL)
(72) Inventor: ROY, Shounak, Maarssenbroek (NL)
(74) Representative: Hoyng Rokh Monegier B.V.

(57) **Abstract**

An LED lamp arrangement (1) for replacing a fluorescent lamp in a luminaire (2), having a plurality of connector pins (3), a plurality of LEDs (14a, 14b) electrically connected in a plurality of groups (15, 16); a switching circuit (20) comprising a first switch (21) for switching the plurality of groups of LEDs (15, 16) between circuit different configurations according to a duty cycle; and an elongated circuit board (102) on which the plurality of groups of LEDs (15, 16) are mounted. The LEDs (14a, 14b) in the different groups (15, 16) are physically placed in a mixture on the elongated circuit board (102) according to a pattern (17), such that for each LED in each group, there is an adjacent LED which belongs to another group.

## Description

### Technical Field

The invention relates generally to light emitting diode (LED) lamps and LED lighting, and more particularly to LED lamps suitable to replace a fluorescent lamp in a luminaire.

### Background

Fluorescent lighting has been around for many years. This form of lighting started out as a highly efficient alternative for incandescent light bulbs, but has recently been surpassed by LED lighting in terms of efficiency and power consumption, and also in other aspects as set out below.

Fluorescent lamps generally comprise a tube filled with an inert gas and a small amount of mercury, capped at both ends with double pinned end caps. The end caps contain a glow wire to preheat the gasses inside the tube and to vaporize the mercury in order to assist with ignition of the fluorescent lamp. After the user turns on a main switch (e.g. a wall switch or a cord switch on the ceiling), the fluorescent lamp is ignited, and heat generated by the conducted current keeps the fluorescent lamp in operational condition. To facilitate starting of the lamp and to limit current through the lamp during operation, and thus limit the power consumed, a ballast is usually fitted in the fluorescent luminaire, connected between the mains power supply and the fluorescent lamp, and power is supplied to the lamp via the ballast.

When first introduced, the only available ballasts were simple inductive or reactive elements placed in series with the power supply to the fluorescent lamp, which limit consumed power by limiting the AC current as a result of the frequency dependent impedance of the inductor. These types of ballasts are usually referred to as magnetic ballasts. More recently other types of ballasts have been introduced, such as electronic ballasts. These ballasts usually first convert AC mains power into DC power, and subsequently convert the DC power into high frequency AC power to drive the fluorescent lamp (e.g. 100-110Vac at a frequency in the range from 20kHz to 70kHz).

LED lamps are more efficient than fluorescent lamps, and have many other advantages. For example, no mercury is required for LED lamps, the light output from LED lamps is more directional, power can be more easily control or regulated, and the lifetime of LEDs is generally much longer than fluorescent lamps. Thus, replacing fluorescent lamps with LED lamps is often desirable, and it is also desirable to be able to fit replacement LED lamps into existing luminaires designed for fluorescent lamps without needing to modify the luminaire. However, an LED lamp typically operates differently when used with different types of ballasts.

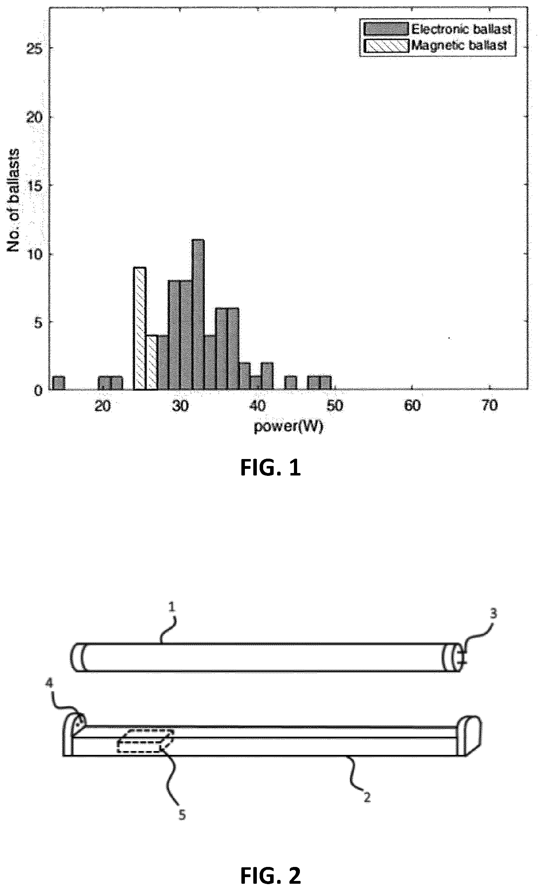

A problem of existing LED lamps is a lack of good power regulation. Different models of existing ballasts can drive the same LED lamp at quite different power levels. FIG. 1 shows a graph of power output by a variety of different makes and models of ballasts on the market, including a large number of electronic ballasts and a small number of magnetic ballasts. The graph shows ballast power output (i.e. the LED lamp input power) on the horizontal axis and the number of different makes and models of ballasts which output that power when driving an exemplary LED lamp without power regulation means on the vertical axis. This wide variation in ballast output power results in a corresponding variation in light output by the LED lamp when the LED lamp is installed into luminaries with different makes and models of ballasts. This situation is undesirable for lamp manufacturers who may advertise an LED lamp as having a certain light output, and for users who expect the same LED lamp to produce the same amount of light regardless of the design of luminaire into which the lamp is installed.

An LED lamp arrangement equipped with a power regulation mechanism is described in applicant's PCT application published as WO 2020/084087 A1, herewith incorporated by reference. This LED lamp arrangement comprises a plurality of LEDs arranged in two or more groups connected in series, and a switch connected in parallel with one group of LEDs, which is bypassed when the switch is closed. The switch operates according to a duty cycle in dependence on the electrical current or electrical power received by or used by the LED lamp. This enables a precise control of the average power. However, due to the periodical switching of the circuit configurations, it has been observed by the inventor that this can have an impact on the uniformity of light produced by the lamp. In some cases, distinct brighter and darker areas illuminated by the LED lamp can be seen. For the user experience this effect is undesirable.

### Summary of the Invention

It is therefore an object of the invention to provide an LED lamp which enables a stable lamp power consumption while producing a uniform, homogeneous light.

The first aspect of the invention concerns an LED lamp arrangement for replacing a fluorescent lamp in a luminaire, the LED lamp arrangement comprising:
- a plurality of connector pins arranged at first and second ends of the LED lamp arrangement, the connector pins being adapted for electrical connection to the luminaire;
- a plurality of LEDs electrically connected in a plurality of groups;
- a switching circuit comprising a first switch (21) for switching the plurality of groups of LEDs between at least a first circuit configuration and a section circuit configuration according to a duty cycle; and
- an elongated circuit board extending from the first end to the second end of the
LED lamp arrangement, on which the plurality of groups of LEDs are mounted, wherein the LEDs in the different groups are physically placed in a mixture on the elongated circuit board according to a pattern, such that for each LED in each group, there is an adjacent LED which belongs to another group.

When switching the plurality of groups of LEDs among different circuit configurations (for example, bypassing one or more of the groups), LEDs in different groups could have different brightness. This is the cause of the non-uniform light produced by the lamp. The solution to this problem is to apply a different treatment between electrical connection and physical placement of the LEDs: although each group of LED may electrically act as a unit, LEDs in different groups are physically placed in a mixture so that these LEDs are located next to each other. In this way, the light produced by different groups of LEDs are mixed with each other, thereby producing a uniform, homogeneous light from the lamp.

LEDs in different groups may for example be arranged in an alternating/interleaved pattern. However, this design could create a tension between the complexity of the circuit and the performance of light mixing. If the distance between the LEDs becomes smaller, the effect of mixing the light produced by the adjacent LEDs becomes better, but this will reduced space that can be used to arrange electrical wiring, which may require a complex layout of the circuit; if this distance becomes larger, the effect of light mixing could be reduced. In a preferred embodiment, the first circuit configuration comprises a greater number of the groups of LEDs electrically connected in series than the second circuit configuration, and the pattern is such that all the groups of LEDs are physically placed in parallel alongside each other on the elongated circuit board (despite the serial electrical connection between several groups of LEDs). This parallel physical placement of the LEDs takes advantage of the secondary optics of the LED lamp (a tubular-shaped housing through which the elongated circuit board extends) and further enables a simple design of the circuit that achieves the desired effect of mixing light.

In an embodiment, the elongated circuit board has a midline extending between the first and second ends of the LED lamp arrangement, and at least two of the groups of the LEDs are decentered from the midline of the elongated circuit board over the same distance in an opposite direction. This decentering deviates from the typical design of LED lamps, but enables different groups of LEDs to be placed in parallel in a simple manner. After the light produced by the LEDs mixes with each other, the result is a uniform light as if coming from the center of the lamp.

In the second circuit configuration, at least one group of LEDs may be bypassed, e.g. connecting the first switch across the at least one group of LEDs. This enables the change of circuit configuration in a simple manner.

In a preferred embodiment, the first switch is adapted to switch the plurality of groups of LEDs between the different circuit configurations at a switching frequency of at least 150 kHz. Electronic ballasts typically provide an output in the range 40kHz to 60kHz. Using a switching frequency much higher than this range, the first switch can operate to achieve a precise control of the power without disturbing the operation of an electronic ballast, particularly where the ballast includes a sensing mechanism which may result in the ballast performing an unnecessary shutdown if the LED lamp does not behave like a fluorescent tube.

The second aspect of the invention concerns an LED circuit for use in the LED lamp arrangement according to the first aspect of the invention. The LED circuit comprises:
- a plurality of LEDs electrically connected in a plurality of groups, the plurality of groups being switchable between at least a first circuit configuration and a section circuit configuration; and
- an elongated circuit board on which the plurality of groups of LEDs are mounted,
   wherein the LEDs in the different groups are physically placed in a mixture on the elongated circuit board according to a pattern, such that for each LED in each group, there is an adjacent LED which belongs to another group.

Additionally, the LED circuit according to the second aspect of the invention may comprise features mentioned above in relation to the first aspect of the invention.

### Brief Description of the Drawings

The advantages of the invention will be apparent upon consideration of the following detailed disclosure of exemplary non-limiting embodiments of the invention, especially when taken in conjunction with the accompanying drawings wherein:
FIG. 1 is a graph of power output by a variety of ballasts when driving an exemplary conventional LED lamp;
FIG. 2 is a diagram of an LED lamp and luminaire;
FIG. 3 is a simplified block diagram of an embodiment of an LED lamp including a first switching circuit for power regulation;
Figs. 4A and 4B schematically show two embodiments of the LED circuit 101 that may be used in the LED lamp arrangement 1 according to the present invention;
Figs. 5A-5D show different emission angles of the lamp in different directions and the possibility of utilising this using the embodiment of Fig. 4B.

### Description of Illustrative Embodiments

The following is a more detailed explanation of exemplary embodiments of the invention. FIG. 2 shows an LED lamp 1 adapted for installation in a luminaire 2 designed for a fluorescent tube, the LED lamp 1 preferably having a size and shape to enable installation into the luminaire 2 without modification. Two electrical connectors 3 (usually in the form of pins) are provided at each end of the LED lamp 1, for releasably connecting to corresponding connectors 4 of the luminaire. The luminaire 2 may include a ballast 5 or may have no ballast. The ballast 5, if included in the luminaire, may be a magnetic ballast or an electronic ballast. The LED lamp 1 may comprise means for detecting whether the luminaire has a ballast and if so, what type of ballast (e.g. by using a frequency detection circuit to determine whether power supplied to the LED lamp exceeds a threshold value, such as 10 kHz), as described in applicant's application WO 2020/084087 A1.

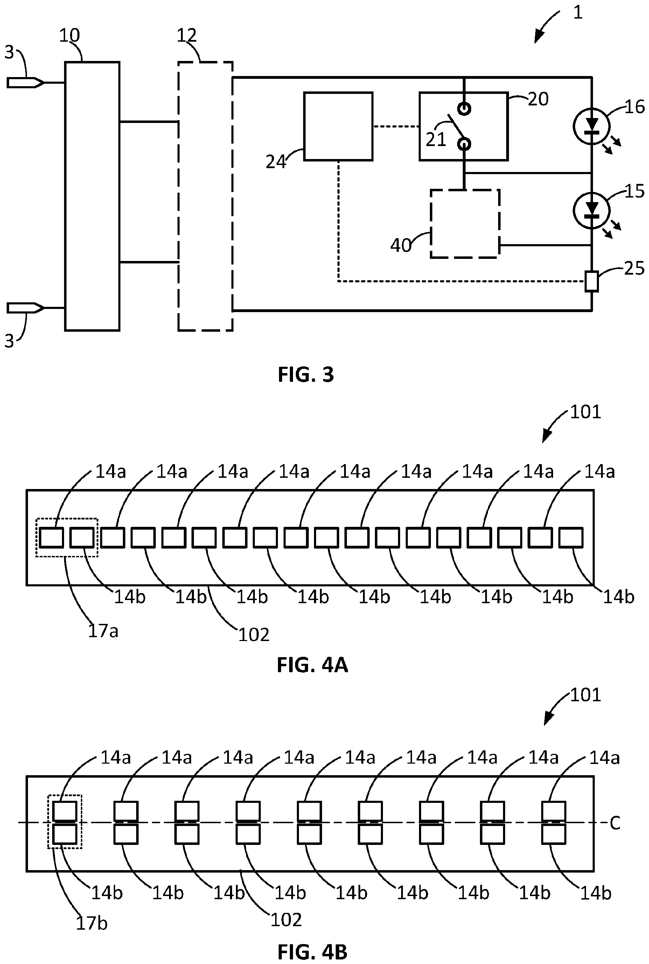

FIG. 3 shows a simplified block diagram an embodiment of the LED lamp 1 according to the invention. In this embodiment, the LED lamp 1 comprises a plurality of connector pins 3 for receiving electrical power from luminaire 2. The connector pins 3 are electrically coupled to a rectifier circuit 10 which is adapted to rectify the electrical voltage and current received by the connector pins 3. The output of rectifier circuit 10 is electrically coupled to an optional filter circuit 12 (such as an EMI filter for reducing the electromagnetic interference (EMI) generated by switching circuit 20 and an optional switched-mode power supply 40, as described in applicant's U.S. Patent No. 10,342,079), and to a switching circuit 20 (via the filter circuit 12 if included). The switching circuit 20 comprises a first switch 21.

The LED lamp 1 includes a plurality of LEDs electrically coupled to an output of rectifier 10 to receive electrical current output by the rectifier 10. The LEDs are arranged in two or more groups (e.g. a first LED group of LEDs 15 and second group of LEDs 16). The first switch 21 operates to switch the LEDs between at least two different circuit configurations in which the plurality of groups of LEDs 15, 16 are connected differently into the circuit of the LED lamp 1. For example, the first group of LEDs 15 and the second group of LEDs 16 may be connected in series, and the first switch 21 may be connected in parallel with the second group of LEDs 16, as shown in Fig. 3.

When the first switch 21 is open, the LEDs are connected in a first circuit configuration with the second group of LEDs 16 not bypassed and the electrical current output by the rectifier 10 flows through both groups of LEDs 15, 16 in series. When the first switch 21 is closed, the LEDs are connected in a second circuit configuration with the second group of LEDs 16 being bypassed (i.e. substantially short-circuited) by the first switch 21 so that the electrical current output by the rectifier 10 flows through the first switch 21 and first group of LEDs 15, bypassing the second group of LEDs 16 so that little or substantially no current flows through the second group of LEDs 16. Thus, in the present embodiment, in the first circuit configuration when the first switch 21 is closed, substantially all of the electrical current from the rectifier 10 passes through the first group of LEDs 15 and not through the second group of LEDs 16, so that the LED lamp consumes a relatively lower power. In the second circuit configuration when the first switch 21 is open, substantially all of the electrical current from the rectifier 10 passes through both the first and second groups of LEDs 15, 16, so that the LED lamp consumes a relatively higher power.

More generally, since different circuit configurations have different connections between the groups of LEDs, the LED lamp consumes different powers in the different circuit configurations. As described below, switching between these different circuit configurations enables the (average) power of the lamp to be regulated.

The first control circuit 24 is adapted to estimate the electrical current, voltage or power received by or used by the LED lamp 1, and is adapted to generate an output on the basis of the estimate for controlling the switching circuit 20 to switch the first switch 21, as described in Applicant's application WO 2020/084087 A1. Based on this output, the switching circuit 20 is adapted to control the first switch 21 to open and close the switch at a certain frequency and at a certain duty cycle. The switching circuit 20 is preferably adapted to switch the first switch 21 at a high frequency, e.g. at 150kHz or higher. A suitable range is from 150kHz to 250kHz, although the frequency may be even higher. Electronic ballasts typically provide an output in the range 40kHz to 60kHz, and the switching frequency of first switch 21 is preferably many times higher than this range so that the first switch can be opened and closed many times to chop off the input power into smaller pieces to achieve a precise power control, and that this operation does not disturb the operation of an electronic ballast, particularly where the ballast includes a sensing mechanism which may result in the ballast performing an unnecessary shutdown if the LED lamp does not behave like a fluorescent tube.

The term duty cycle as used herein refers to the fraction of each cycle of opening and closing the first switch 21 during which fraction the first switch 21 is closed. In other words, a 100% duty cycle refers to the situation where the first switch 21 is constantly closed (so that the second group of LEDs 16 is always bypassed), and a 0% duty cycle refers to the situation where the first switch 21 is constantly open (so that the second group of LEDs 16 is never bypassed). The switching circuit 20 is configured to adjust the duty cycle in dependence on the output of the first control circuit 24 to adjust the power consumed or used by the LED lamp 1. The switching circuit 20 may be configured to also adjust the switching frequency of the first switch 21 in dependence on the output of the first control circuit 24.

By changing the duty cycle, the LED lamp 1 can adapt the average power consumed by the LED lamp 1, thereby achieving the desired lamp power level. In this way, the LED lamp 1 can have a substantially stable and predictable lamp power consumption and light output irrespective of the make or model of ballast used to supply power to the LED lamp 1.

In some embodiments, the switching circuit 20 may comprise a switched mode power supply 40, which may be of conventional design for converting the rectified DC supply from rectifier circuit 10 to generate a switched DC output suitable for driving LEDs 14. As shown in Fig. 1, when the LED lamp 1 is operated with a magnetic ballast (or a direct mains luminaire), the power regulation provided by switching circuit 20 and first switch 21 may not be necessary. In this case, the switching circuit 20 may apply a duty cycle of zero (or be deactivated, disconnected or disabled using other means), and one or more of the groups of LEDs 15, 16 may be instead powered from a switched-mode power supply 40. In the embodiment shown, only the first group of the LEDs 14 is powered from the switched mode power supply 40. Alternatively, both groups of LEDs 15, 16 may be powered from it (e.g. by connecting the switched-mode power supply 40 across both groups). Similarly, when there are more than two groups of the LEDs, two or more (including all) groups of the LEDs may be powered from the switched mode power supply 40.

In the present embodiment, each group of the LED 15, 16 is electrically switched as a unit. However, in order to improve the uniformity of light produced by the lamp, the LEDs in the different groups 15, 16 are physically placed in a mixture on a circuit board. This enables the light produced by the LEDs in different groups to be mixed with each other to generate a uniform light from the lamp. Several examples are described below.

Typically, an LED lamp for replacing a fluorescent lamp contains a (printed) circuit board (inside a tubular-shaped housing) on which the LEDs are mounted (e.g. soldered). Other electronics, such as LED drivers, may be arranged on one or more other circuit boards (e.g. at one or both ends of the lamp). Figs. 4A and 4B schematically show two embodiments of the LED circuit 101 that may be used in the LED lamp arrangement 1 according to the present invention. In these embodiments, the LEDs 14a in the first group of LEDs 15 and LEDs 14b in the second group of LEDs 16 are physically placed according to a pattern on an elongated circuit board 102.

In the embodiment shown in Fig. 4A, the LEDs 14a, 14b are arranged according to an alternating pattern 17a, using a certain ratio of the first group of LEDs 15 and second group of LEDs 16 (e.g. a ratio of 1:1). In the embodiment shown, this pattern repeats along the elongated circuit board 102. In this way, the LEDs 14a in the first group of LEDs 15 and LEDs 14b in the second group of LEDs 16 are physically placed next to each other. This makes it possible to mix the light generated from these different LEDs and produce a uniform light.

LED lamps typically need to fulfill certain requirements to reduce so-called "glare" effect, i.e. the loss of visual performance or discomfort produced by a high intensity of light in the visual field of a user when too much light enters the user's eye. This is typically achieved by the so-called secondary optics of the lamp by implementing certain non-transparency in the tubular-shaped housing (e.g. having a visible light transmission between 88%-95%) to reduce the emission angle of each LED. The reduced emission angle of LEDs can nevertheless reduce the effect of mixing the light produced by the adjacent LEDs. This could impose constraints on the circuit design. If the distance between the LEDs becomes smaller, the effect of mixing the light produced by the adjacent LEDs becomes better, but this will reduced space that can be used to arrange electrical wiring, which may require a complex layout of the circuit; if this distance becomes larger, the effect of light mixing could be reduced.

Fig. 4B shows a more preferred embodiment, allowing the use of a simple circuit design to achieve the desired effect of mixing the light produced by the adjacent LEDs. In this embodiment, despite the series connection between the two groups of LEDs 15, 16, the LEDs 14a in the first group of LEDs 15 and LEDs 14b in the second group of LEDs 16 are arranged in a parallel pattern 17b next to each other. This design does not require any wiring to be (physically) located between LEDs in different groups, thus allows these LEDs to be placed in close proximity to each other.

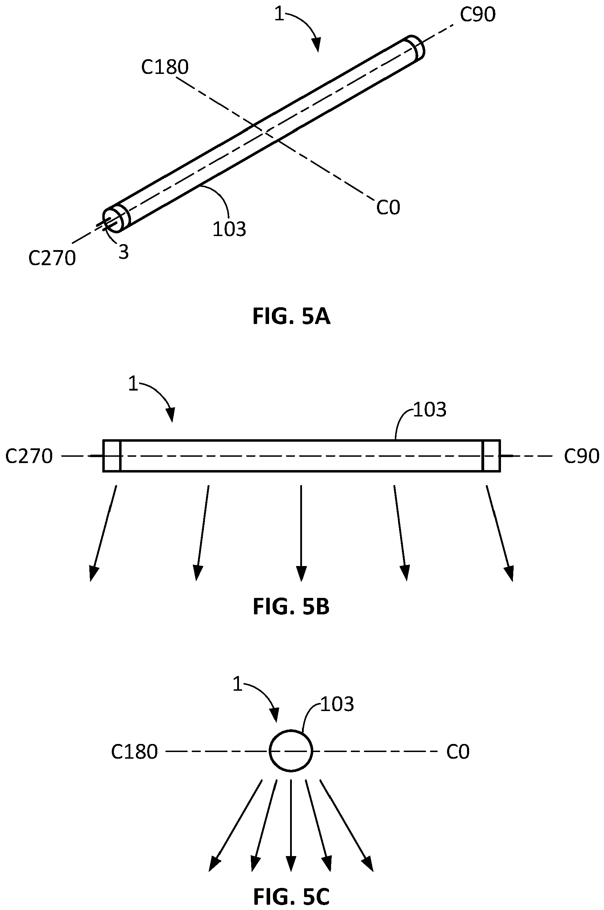

Fluorescent lamps emits light symmetrically from their central axis. In order to emulate this, LED lamps for replacing fluorescent lamps typically have the LEDs arranged along the center line of the circuit board. The embodiment of Fig. 4B deviates from this design: as shown in Fig. 4B, LEDs 14a, 14b in both groups of LEDs 15, 16 are decentered from the midline C of the elongated circuit board 102. Despite the decentering of both groups 15, 16, this embodiment takes advantage of the secondary optics to maximize the effect of mixing the light produced by the adjacent LEDs. Thanks to this, a uniform, homogeneous light can be produced by the LED lamp as if the light comes out of the center of the LED tube. An example is shown in Figs. 5A-5D.

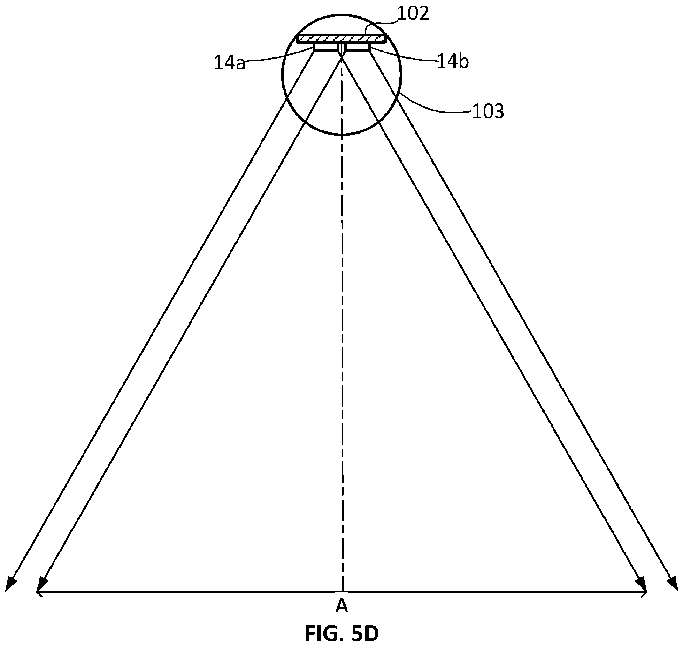

Similar to a fluorescent lamp, the LED lamp arrangement 1 according to the invention may have a cylindrical shape having a tubular-shaped housing 103, as shown in Fig. 5A. The housing 103 functions to modify the light originating from the LEDs inside the housing 103, and subsequently emit the modified light in various angles. Conventionally, the cross-sectional plane in the transverse direction is designated by C0-C180, and the cross-sectional plane in the longitudinal direction is designated by C90-C270. The number after the "C" indicates the angle at which the plane lies when looking at the light distribution from above the luminaire. As shown in Figs. 5B and 5C, the tubular-shaped housing 103 is typically designed in such a way that the light coming out of the housing 103 (shown as unnumbered arrows) spans in a wider angle in the transverse direction (as shown in Fig. 5C) than in the longitudinal direction (as shown in Fig. 5B). As described above, a wider emission angle is preferrable to achieve of mixing the light produced by the adjacent LEDs. Utilising this characteristic of the tubular-shaped housing 103, placing the LEDs in the C0-C180 plane thus not only enables a simple circuit design, it also maximizes the effect of mixing light. This is shown in Fig. 5D described below.

Fig. 5D shows a cross-sectional view of the operation of the embodiment of Fig. 4B. On the circuit board 102, the LEDs 14a, 14b in the different groups 15, 16 are arranged in parallel next to each other. Each LED generates its respective light beam that exits the tubular-shaped housing 103 with a maximum emission angle, and due to the close proximity of the LEDs 14a, 14b in different groups, the light beams coming out of different LED groups are overlapped in a large area A, which constitutes the majority of the illuminated area of the LED lamp and is symmetric with respect to the midline of the elongated circuit board (and thereby the lamp). The overall effect is a homogeneous light distribution coming out from the center of the lamp, as the user would expect from a fluorescent lamp.

The distance between the LEDs 14a, 14b in different groups should be small enough to allow a sufficient overlap between the light generated by different LEDs. The optimum distance can be influenced by several factors, such as the pattern used to place the LEDs and the transparency of the tubular-shaped housing 103. In principle, the smaller the emission angle, the shorter the distance should be. In the embodiments of Fig. 4B and 5D, it has been observed that placing the different LEDs of different groups within proximity of 12 mm is sufficient. In the embodiment of Fig. 4A, this distance should be smaller, as the light is mixed in the longitudinal direction in this case (see Fig. 5B). Similarly, when the transparency of the housing 103 reduces (which results in a smaller emission angle), the selected distance should also be smaller.

In embodiments of the present invention, each group of LEDs may be a string of LEDs electrically connected to each other in series. Although the embodiments described above show two groups of LEDs connected in series, the LED lamp 1 may include three or more groups of LEDs and/or the interconnection of the groups of LEDs may be different (for example, the LED lamp may additionally comprise a few LED groups electrically connected in parallel to the first or second group of LEDs and/or to each other in all circuit configurations), and the number of LEDs in each group may be the same or may differ among the groups. The same principles described above apply in these cases. By physically placing LEDs in different groups next to each other, the light generated from these different LEDs can be mixed with each other, thereby producing a uniform light. For example, when there are three or more groups of LEDs, all groups of the LEDs may be placed in parallel alongside each other, in a manner similar to Figs. 4B and 5 described above.

Furthermore, although the embodiments described above show a rectangular circuit board, this circuit board may also have other shapes, such as a circular shape. In this case, the long side of the elongated circuit board represents the circumference of the circular shape. Applying the embodiments of Figs. 4B and 5D to this case, the different groups of LEDs may for example be placed in a concentric manner.

Similarly, although the embodiments described above includes a first switch 21 connected in parallel with one of the groups of LEDs, the first switch 21 may be connected in different ways to define different circuit configurations of the groups of LEDs, and/or the LED lamp 1 may include more than one switch for altering the configuration of the groups of LEDs.

It will be appreciated by the skilled person that the embodiments described herein all relate to an LED lamp assembly having means to regulate the lamp power, and features described in relation to one embodiment may be used with or combined with features of the other embodiments. While the principles of the invention have been set out above in connection with specific embodiments, it is to be understood that this description is merely made by way of example and not as a limitation of the scope of protection, which is determined by the appended claims.

## Claims

1. An LED lamp arrangement (1) for replacing a fluorescent lamp in a luminaire (2), the LED lamp arrangement (1) comprising:
- a plurality of connector pins (3) arranged at first and second ends of the LED lamp arrangement (1), the connector pins being adapted for electrical connection to the luminaire (2);
- a plurality of LEDs (14a, 14b) electrically connected in a plurality of groups (15, 16);
- a switching circuit (20) comprising a first switch (21) for switching the plurality of groups of LEDs (15, 16) between at least a first circuit configuration and a section circuit configuration according to a duty cycle; and
- an elongated circuit board (102) extending from the first end to the second end of the LED lamp arrangement (1), on which the plurality of groups of LEDs (15, 16) are mounted,
wherein the LEDs (14a, 14b) in the different groups (15, 16) are physically placed in a mixture on the elongated circuit board (102) according to a pattern (17), such that for each LED in each group, there is an adjacent LED which belongs to another group.

2. The LED lamp arrangement (1) according to claim 1, wherein the first circuit configuration comprises a greater number of the groups of LEDs electrically connected in series than the second circuit configuration, and wherein the pattern (17) is such that all the groups of LEDs (15, 16) are physically placed in parallel alongside each other on the elongated circuit board (102).

3. The LED lamp arrangement (1) according to claim 2, wherein the elongated circuit board has a midline (C) extending between the first and second ends of the LED lamp arrangement (1), and wherein at least two of the groups of the LEDs (15, 16) are decentered from the midline (C) of the elongated circuit board (102) over the same distance in an opposite direction.

4. The LED lamp arrangement (1) according to any of the preceding claims, wherein, in the second circuit configuration, at least one group of LEDs (15, 16) is bypassed.

5. The LED lamp arrangement (1) according to any of the preceding claims, wherein the a first switch is adapted to switch the plurality of groups of LEDs (15, 16) between the different circuit configurations at a switching frequency of at least 150 kHz.

6. An LED circuit (101) for use in the LED lamp arrangement (1) according to any of the preceding claims, the LED circuit comprising:
- a plurality of LEDs (14a, 14b) electrically connected in a plurality of groups (15, 16), the plurality of groups (15, 16) being switchable between at least a first circuit configuration and a section circuit configuration; and
- an elongated circuit board (102) on which the plurality of groups of LEDs (15, 16) are mounted,
wherein the LEDs (14a, 14b) in the different groups (15, 16) are physically placed in a mixture on the elongated circuit board (102) according to a pattern (17), such that for each LED in each group, there is an adjacent LED which belongs to another group.
